Europäisches Patentamt

(19) European Patent Office

Office européen des brevets

(11) Publication number: **0 284 448**
**A1**

(12) # EUROPEAN PATENT APPLICATION

(21) Application number: **88400106.6**

(22) Date of filing: **19.01.88**

(51) Int. Cl.⁴: **B 01 D 53/04**
**C 01 B 21/04**

(30) Priority: **19.01.87 JP 11105/87**

(43) Date of publication of application:
**28.09.88 Bulletin 88/39**

(84) Designated Contracting States:
**BE DE ES FR GB IT NL**

(71) Applicant: **KABUSHIKI KAISHA KOBE SEIKO SHO also known as Kobe Steel Ltd.**
**3-18 1-chome, Wakinohama-cho Chuo-ku Kobe 651 (JP)**

(72) Inventor: **Funada, Ichiro**
**126-163, Tomogaoka 7-chome**
**Suma-ku Kobe-shi (JP)**

**Mita, Toshio**
**183-30, Honmachi 1-chome Midorigaoka**
**Miki-shi Hyogo-ken (JP)**

(74) Representative: **Rodhain, Claude et al**
**Cabinet Claude Rodhain 30, rue la Boétie**
**F-75008 Paris (FR)**

(54) High purity nitrogen producing method and device therefor.

(57) A high purity nitrogen producing method used in a pressure swing adsorption method including the steps of introducing a raw material gas containing $N_2$ as a principal component and $O_2$ into an adsorption column, adsorbing the $N_2$ by an adsorbent, and reducing pressure in the adsorption column to desorb and recover the $N_2$ having a high purity, characterized in that a synthetic zeolite is used as the adsorbent, and that an average contact time T (unit : sec) as expressed by T : L/V is not greater than 30 sec, where L is a filling length (unit : m) of the adsorbent, and V is an average superficial velocity (unit : m/sec) of a raw material gas in an adsorption column in an adsorption step. Also disclosed a high purity nitrogen producing device characterized in that a synthetic zeolite having an adjusted hole diameter of 7 - 10 A is filled in the adsorption column.

FIGURE I

Graph: PURITY OF PRODUCT $N_2$ GAS (%) versus AVERAGE CONTACT TIME (SEC). Curves labeled SYNTHETIC ZEOLITE 8~9 Å L/D = 3~20; SYNTHETIC ZEOLITE 8~9 Å L/D = 0.2~2.5; SYNTHETIC ZEOLITE 5Å L/D = 0.2~20.

EP 0 284 448 A1

**Description**

## HIGH PURITY NITROGEN PRODUCING METHOD AND DEVICE THEREFOR

BACKGROUND OF THE INVENTION

The present invention relates to a method and a device for absorbing and recovering a $N_2$ gas by a Pressure Swing Adsorption method (herein after refered to as PSA), and more particularly to a method and a device for producing a high purity $N_2$ gas with a high recovery ratio by greatly reducing an impurity component contained in a product gas desorbed.

A method of separating and purifying $N_2$ from a raw material gas (mainly, air) containing $N_2$ as a principal component and $O_2$ as an impurity component by utilizing a PSA device is generally classified into two methods, that is, (1) one including the steps of adsorbing $O_2$ by an adsorbent and recovering $N_2$ after passing through the adsorbent, and (2) the other including the steps of adsorbing $N_2$ once to separate same from $O_2$ and then desorbing the $N_2$ as a product.

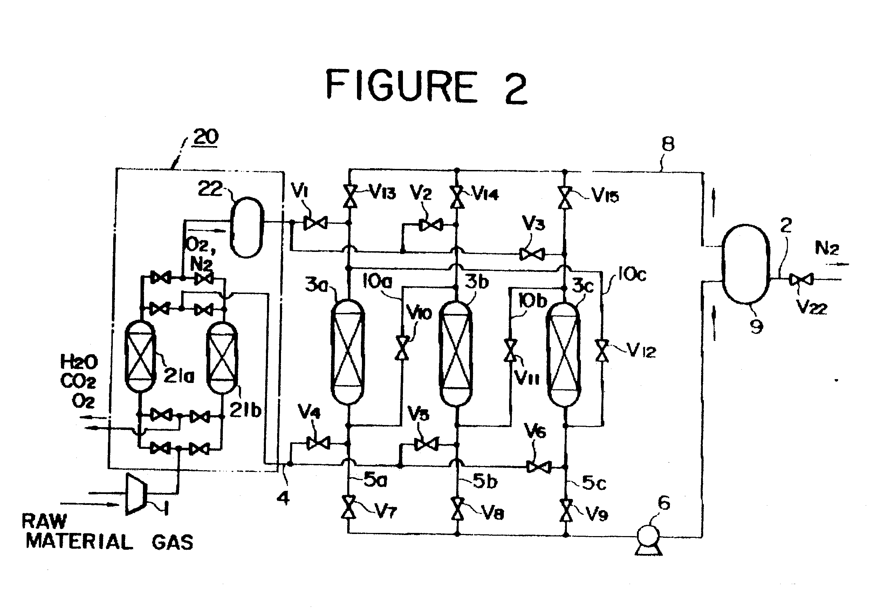

Describing the latter method in detail, the $N_2$ component is adsorbed by the adsorbent filled in an adsorption column under a substantially atmospheric pressure or a pressurized condition, and then the pressure in the adsorption column is reduced by using a vacuum pump or the like to desorb the $N_2$ with a high purity for a product gas. Fig. 2 shows an exemplary devuuice for embodying this method, wherein a three-column PSA device including a pretreatment section 20 is schematically illustrated. In the following description, air is used as the raw material gas containing $N_2$ and $O_2$, but the raw material gas applicable in the present invention is not limited to air.

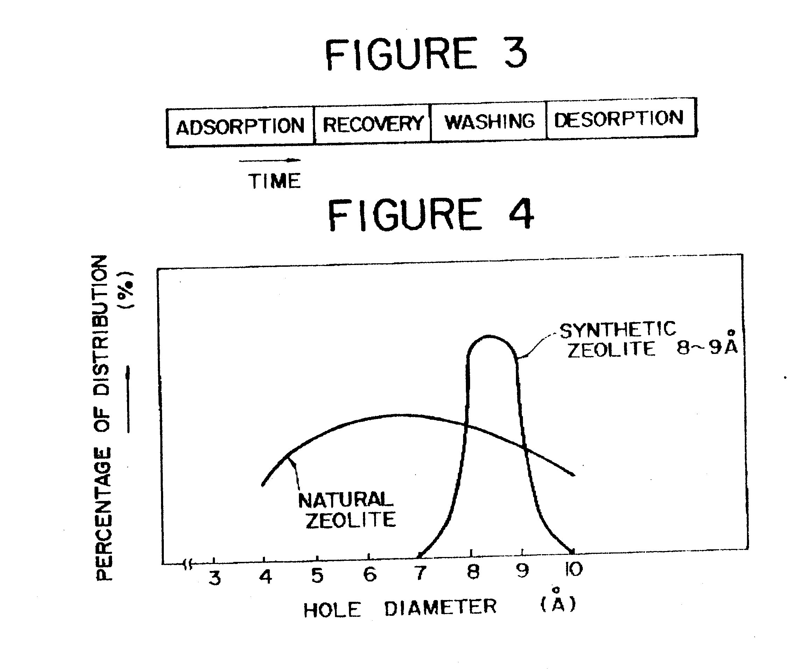

The raw material air pressurized by a compressor 1 is supplied to either of a pretreatment column 21a or 21b to adsorb off $H_2O$ and $CO_2$. Then a residual component is fed to a pressure adjusting tank 22, and is thereafter supplied to any one of three asorption columns 3a - 3c. In each of the adsorption columns 3a - 3c, $N_2$ is separated and purified in the order of steps as shown in Fig. 3 with a time difference being set among the adsorption columns 3a - 3c.

There will be now described the order of the steps in the adsorption column 3a. First in the adsorption step, a mixed gas of $O_2$ and $N_2$ passing through the pressure adjusting tank 22 is received by the adsorption column 3a via an automatic openable valve $V_1$ (which will be hereinafter simply referred to as a valve). $N_2$ is adsorbed by the adsorbent filled in the adsorption column 3a, while an emission gas passing through the adsorption column 3a is refluxed through a valve $V_4$ and an emission gas pipe 4 to the pretreatment section 20, and is then emitted from the section.

The adsorbent may include a natural zeolite and a synthetic zeolite.

While the adsorption of $N_2$ precedes in the adsorption step, it is unavoidable that $O_2$ is partially trapped physically by holes of the adsorbent since a molecular structure of $N_2$ is closely similar to that of $O_2$, and a molecular size of $N_2$ is not so different from that of $O_2$. To this end, if a desorption step as conducted just after the adsorption step, $O_2$ is desorbed together with $N_2$ to cause a reduction in purity of a product $N_2$ gas. Accordingly, it is necessary to conduct a washing step prior to the desorption step, and it is frequent that a recovery step precedes the washing step in consideration of economy (improvement in product recovery). In this regard, there will be described the recovery step. In the recovery step, an emission gas containing a rich $N_2$ after the washing step (to be hereinafter described in detail) in the other adsorption column 3c is fed through a bypass pipe 10c to the adsorption column 3a. As a result, $O_2$ trapped by the adsorbenty as mentioned above is partially substituted by $N_2$, and is emitted from the emission gas pipe 4. Althoug the recovery step is so called in a sense such that $N_2$ is additionally adsorbed, it may be referred to as a preliminary washing step from the viewpoint of the fact that $O_2$ is partially eliminated.

In the washing step, a high purity $N_2$ gas is fed from a product gas tank 9 through a washing gas pipe 8 to the adsorption column 3a, so that a residual $O_2$ in the adsorbant may be subsituted off by $N_2$ to increase a purity of $N_2$ in the adsorbent. Although the gas passing through the adsorption column 3a contains $O_2$ as substituted off, the gas originally has a high purity of $N_2$, that is, contains a high concentration $N_2$. Accordingly, emission of the gas to the atmosphere would cause greatly poor economy. To cope with this, the gas is fed through a bypass pipe 10a to the adsorption column 3b, so as to adsorb $N_2$ in the emission gas in the recovery step as mentioned above.

After the end of the washing step, the adsorption column 3a is connected through a desorbed gas recovery pipe 5a and a valve $V_7$ to a vacuum pump 6. Then, the pressure in the adsorption column 3a is reduced to desorb $N_2$ from the adsorbent, which gas having a high purity is in turn stored in the product gas tank 9. As is described above, each of the steps is repeated in each adsorption column, and the various other steps between each adsorption column are conducted with a cycle of each step shifted by 1/(the number of columns). Thus, a total production process is scheduled in such that the desorption step may be conducted in any one of the adsorption columns, thereby permitting a continuous production of a high purity $N_2$.

The afore-mentioned conventional method has the following two problems.

First, even if considering the pressure of the raw material air pressure, the desorption pressure and the operation time, etc. the purity of the product $N_2$ is generally at most 99.9%, and it was not possible to economically reach a high purity greater than 99.9% to be required by a heat treatment process in working a steel. Accordingly, application of the $N_2$ gas produced by using the PSA device was limited.

Secondly, the operation time of the washing step must be increased so as to enhance the efficiency of elimination of the $O_2$ gas. That is, as a large amount of the $N_2$ gas purified is used as a washing gas, the recovery of $N_2$ is reduced, and the frequency of execution of the steps per unit time is decreased. As a result, the operation efficiency of the device is reduced to uneconomically cause an increase in electric power consumption rate. In other words, the washing step must be conducted in compensation for the recovery of $N_2$, and such restriction obstructs the contribution to improvement in the purity of $N_2$.

SUMMARY OF THE INVENTION

It is an object of the present invention to provide a high purity nitrogen producing method and a device therefor which may reliably substitute $N_2$ for a large amount of $O_2$ trapped by an adsorbent in a short time and obtain a product $N_2$ gas having a high purity of 99.9% or more.

It is another object of the present invention to provide a high purity nitrogen producing method and a device therefor which may shorten not only an adsorption time but also a recovery time and a washing time and thereby carry out an efficient operation.

According to the present invention, there is provided a high purity nitrogen producing method characterized in that a synthetic zeolite is used as an adsorbent, and that an average contact time T (unit : sec) as expressed by T = L/V is not greater than 30 sec, where L is a filling length (unit : m) of the adsorbent, and V is an average superficial velocity (unit : m/sec) of a raw material gas in an adsorption column in an adsorption step (hereinafter referred to as the average velocity or V).

According to the present invention, there is further provided a high purity nitrogen producing device characterized in that a synthetic zeolite having an adjusted hole diameter of 7 - 10 A is filled in the adsorption column.

Generally, a gas velocity in the case of introducing raw material gas into the adsorption column under pressure is always fluctuated by pulsation of a pump pressure and resistance associated with an increase in introducing gas pressure in the column, and it is therefore difficult to strictly express a contact condition between the raw material gas and the adsorbent. Accordingly, the average contact time T for which the raw material gas contacts the adsorbent is assumed in the following manner for the convenience sake. That is, as there is present a large difference in pressure in the adsorption column between an initial stage and a final stage of the adsorption step, an introduction velocity of the raw material gas is calculated on the basis of an average pressure in the column in the adsorption step, and the calculated introduction velocity is assumed as the average velocity V (m/sec). On the assumption of the above, the average contact time T (unit sec) may be expressed as follows :

$$T = \frac{\text{Filling length L (m) of the adsorption in the adsorption column}}{\text{The average velocity V (m/sec)}}$$

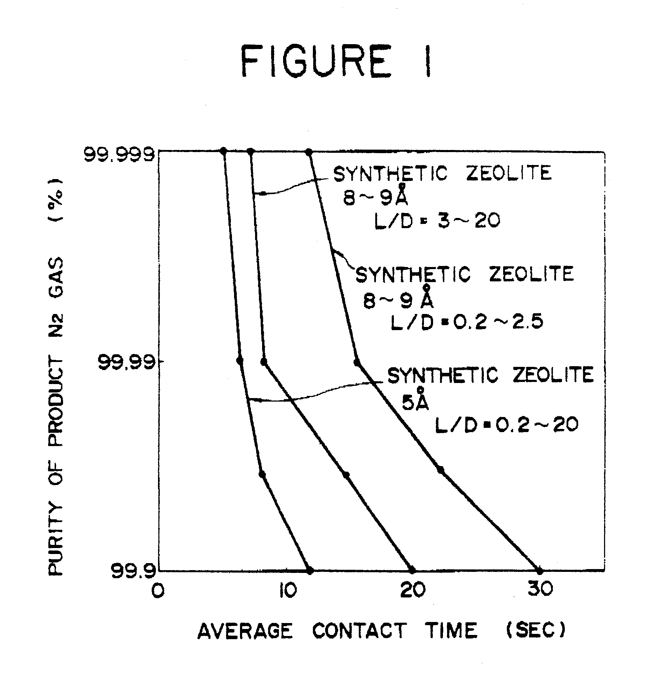

It has been found that the purity of a product $N_2$ gas can be maintained not less than 99.9% as shown in Fig. 1 (graph) by setting the average contact time to 30 sec or less. Such a short-time contact permits $N_2$ and $O_2$ to merely contact a surface layer of the adsorbent and prevent $O_2$ physically trapped by the hole of the adsorbent from reaching a deep portion of the hole. Accordingly, the substitution of $N_2$ for $O_2$ in the recovery or washing step may be quickly and reliably carried out, and a residual quantity of $O_2$ after washing may be therefore decreased as little as possible. Thus, the product $N_2$ may be highly purified, and the substitution of $N_2$ for $O_2$ may be completed in a short time. As a result, a washing gas may be saved to improve a total recovery quantity, and a washing time may be shortened to allow a highly efficient operation. Further, it is recommended that the average contact time T be set to 16 sec or less, so as to further improve the purity of $N_2$ up to 99.998 - 99.9999%.

The average velocity is adjustable by a multistage compressor and a flow control valve, and it is also adjustable by a pressure adjusting tank as shown in Fig. 2.

As mentioned above, a $N_2$ molecule is approximated in size to a $O_2$ molecule (the former is of about 3.6 A, and the latter is about 3.4 A). If the hole diameter of the synthetic zeolite used as the adsorbent is 6 A, the $O_2$ molecule trapped by the hole is relatively strongly embraced in the hole, and even when the $N_2$ molecule approaches to the $O_2$ molecule so as to be substituted therefor, it is inhibited from entering the hole because of a small clearance between the outer circumference of the $O_2$ molecule and the inner surface of the hole, causing insufficient proceeding of the substitution. When a synthetic zeolite having an adjusted hole diameter of 7 - 10 A was used according to the present invention, it has been found that a trapping force of the $O_2$ molecule became weak because of a relatively large hole diameter, and that the entry of the $N_2$ molecule was easily effected to thereby relatively easily substitute the $N_2$ molecule for the $O_2$ molecule. That is, the $O_2$ may be quickly and reliably substituted off by the washing gas, thereby effectively obtaining the high purification of $N_2$ and the high efficiency of the washing step. In the preferred embodiment as shown in Fig. 1 utilizing a synthetic zeolite having a hole diameter of 8 - 9 A, it is possible to obtain a high purity $N_2$ gas even when the average contact time is longer than that in the case of using a synthetic zeolite having a hole diameter of 5 A.

Preferably, the synthetic zeolite has a distribution including 95% or more of same having a hole diameter of 7 - 10 A, and more preferably has a distribution including 85% or more of same having a hole diameter of 8 - 9A.

Further, a $CO_2$ molecule is of about 4.4 A in size, and it is therefore more difficult to substitute $N_2$ for $CO_2$ than for $O_2$ once the $CO_2$ molecule is trapped in the hole. In using a synthetic zeolite having a hole diameter of 5 A, it is difficult to desorb the $CO_2$ molecule even by usual reduced pressure (100 - 150 Torr), once $CO_2$ is adsorbed. Therefore, the adsorption capacity of the adsorbent is decreased with a time elapsed. In this regard, the use of the synthetic zeolite having a hole diameter of 7 - 10 A enables easy desorption of $CO_2$ under reduced pressure as mentioned above, thus maintaining the performance of the adsorbent in good condition for a long time.

Other objects and features of the invention will be more fully understood from the following detailed description and appended claims when taken with the accompanying drawings.

BRIEF DESCRIPTION OF THE DRAWINGS

Fig. 1 is a graph showing the relation between the average contact time and the product $N_2$ gas ;

Fig. 2 is a schematic diagram of the $N_2$ gas producing PSA device ;

Fig. 3 is an illustration showing the order of steps in one adsorption column of the PSA device shown in Fig. 2 ;

Fig. 4 is a graph showing a distribution of the hole diameters of the adsorbent ; and

Fig. 5 is a graph showing the relation between a quantity of product $N_2$ gas and a purity thereof.

DETAILED DESCRIPTION OF THE PREFERRED EMBODIMENTS

Example 1

Using the PSA device as shown in Fig. 2, a raw material gas (a mixed gas of $O_2$ and $N_2$) was supplied from the pressure adjusting tank 22 to the adsorption columns 3a - 3b. The average contact time as defined in the previous description was varied, and the influence to the product $N_2$ gas purity and the recovery quantity was investigated. In conducting the test, various adsorption columns were used with a ratio of the filling length L of the adsorbent to the diameter D ranging from 0.2 to 20, and synthetic zeolite having adjusted hole diameters of 5 A and 8 - 9 A were used as the adsorbent. The distribution of the synthetic zeolite having a hole diameter of 8 - 9 A is shown in Fig. 4 in comparison with the natural zeolite. The desorption pressure was set at 100 Torr, and the execution time in each step was 5 - 15 sec for the adsoption step ; 45 - 55 sec for the recovery step ; 45 - 55 sec for the washing step ; 55 - 65 sec for the desorption step.

As is appreciated from Fig. 1, it was found that the shorter the average contact time is, the higher the purity of the $N_2$ gas becomes. In the case of using the synthetic zeolite having a hole diameter of 8 - 9 A and the adsorption column having a ratio L/D of 3 - 20, for example, the purity of the product $N_2$gas reached about 99.9% with the average contact time of 20 sec, while it reached about 99.999% with the average contact time of 7 sec. When the purity of 99.999% was achieved, the quantity of air supplied as a raw material was 150 $Nm^3/h$, and the quantity of product $N_2$ gas as recovered was 50 $Nm^3/h$.

Further, in the case of using the synthetic zeolite having a hole diameter of 8 - 9 A and the adsorption column having a ratio L/D of 0.2 - 2.5, it was found that the purity of the product $N_2$ gas of 99.9% or more may be ensured by setting the average contact time to 30 sec or less.

A gas flow direction in the PSA device as shown in Fig. 2 is set in such that the raw material gas, the washing gas and the emission gas after the substitition are allowed to flow from the upper portion of the adsorption column to the lower portion thereof. Therefore, a packed layer of the adsorbent is not disturbed, and just after subsituting $N_2$ for $O_2$ trapped by the adsorbent, the $O_2$ gas is emitted out of the column, that is, there is no possibility of the $O_2$ gas being moved to the central portion of the adsorption column after the substitution and being-trapped by the adsorbent. Furthermore, as a gas flow direction upon desorption is also set in such that the desorbed gas is allowed to flow from the upper portion of the adsorption column to the lower portion thereof, any shock due to pressure fluctuation is not exerted on the adsorbent.

Example 2

To consider a difference in performance due to variation in the hole diameter of the synthetic zeolite, the following test was conducted.

The synthetic zeolite was filled in the adsorption column having a diameter of 40mm and a length of 500mm, and a raw material air was introduced with the average contact time of 7 sec. After the recovery and washing step, the desorption was carried out under reduced pressure of 100 Torr.

The synthetic zeolite used as the adsorbent includes a synthetic zeolite having a distribution of the hole diameter as shown in Fig. 4 (having a peak at 8 - 9 A) and a conventional synthetic zeolite having a hole diameter of 5 A mainly.

In the case that the synthetic zeolite having a hole diameter of 8 - 9 A at the peak of the distribution was filled in the adsorption column, the substitution of $N_2$ for $O_2$ was almost completed for a total requisite time of 50 sec for the recovery and the washing, and the $N_2$ gas having a purity of 99.999% was obtained. To the contrary, in the case that the synthetic zeolite having a hole diameter of 5 A was filled in the adsorption column, a

4

substitution and desorption speed was slow, and the substitution of $N_2$ was not sufficiently carried out within a predetermined recovery and washing time (53 sec). As a result, the purity of the $N_2$ gas did not exceed 99.94%.

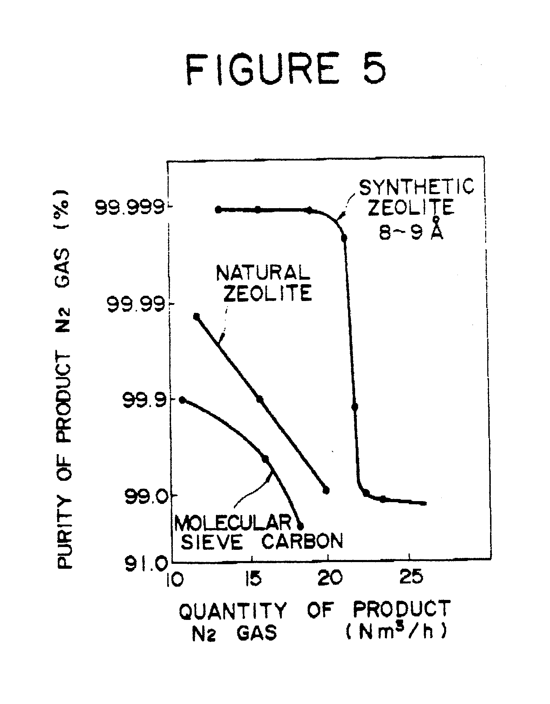

Fig. 5 is a graph showing the relation between a purity of product $N_2$ gas and a quantity of the gas when a raw material air was supplied at a rate of 60 $Nm^3/h$ to a three-column PSA device including adsorption columns filled with a synthetic zeolite having 85% or more of 8 - 9 A diameter hole. In comparison with the above, there are also shown graphs in the case of using a natural synthetic zeolite and a molecule sieve carbon. As is appreciated from Fig. 5, although the purity in the case of the synthetic zeolite (8 - 9 A) is rapidly decreased when the quantity of the $N_2$ gas exceeds a limit value (about 20 $Nm^3/h$), a high purity of 99.999% or more may be maintained until the limit value is reached. In contrast, in the case of using the natural zeolite or the molecular sieve carbon, the purity is gradually decreased as the quantity of the $N_2$ gas increases, and a maximum purity is 99.98%. It became clear that the quantity of the $N_2$ gas was decreased so as to maintain the maximum purity, and that a consumption rate per unit raw material was therefore increased, causing greatly poor economy.

While the invention has been described with reference to specific embodiments, the description is illustrative and is not to be construed as limiting the scope of the invention. Various modification and changes may occur to those skilled in the art without departing from the spirit and scope of the invention as defined by the appended claims.

## Claims

1° - A high purity nitrogen producing method used in a pressure swing adsorption method including the steps of introducing a raw material gas containing $N_2$ as a principal component and $O_2$ into an adsorption column, adsorbing the $N_2$ by an adsorbent, and reducing pressure in said adsorption column to desorb and recover the $N_2$ having a high purity, characterized in that a synthetic zeolite is used as said adsorbent, and that an average contact time T (unit : sec) as expressed by $T = L/V$ is not greater than 30 sec, where L is a filling length (unit : m) of said adsorbent, and V is an average superficial velocity (unit : m/sec) of a raw material gas in an adsorption column in an adsorption step.

2° - The high purity nitrogen producing method as defined in claim 1, wherein said synthetic zeolite has a hole diameter of 7 - 10 A.

3° - The high purity nitrogen producing method as defined in claim 2, wherein said synthetic zeolite having the hole diameter of 7 - 10 A occupies 95% or more in the percentage of distribution.

4° - The high purity nitrogen producing method as defined in any one of claims 1 - 3, further comprising the steps of partially supplying said high purity $N_2$ produced as a washing gas to said adsorption column prior to the desorption step in said adsorption column, substituting a residual $O_2$ in said adsorption column by said washing gas, feeding an emission gas generated after the substitution to another adsorption column, and adsorbing $N_2$ in said emission gas by said another adsorption column.

5° - The high purity nitrogen producing method as defined in any one of claims 1 - 4, wherein introduction of said raw material gas, said washing gas and said emission gas into said adsorption column is designed to maintain the same gas flow in said adsorption column.

6° - A high purity nitrogen producing device, used in a pressure swing adsorption device for adsorbing $N_2$ by an adsorbent in an adsorption column, desorbing the $N_2$ under reduced pressure, and recovering the $N_2$ with a high purity, characterized in that a synthetic zeolite having an adjusted hole diameter of 7 - 10 A is filled in said adsorption column.

7° - The high purity nitrogen producing device as defined in claim 6, wherein said synthetic zeolite having the adjusted hole diameter of 7 - 10 A occupies 95% or more in the percentage of distribution.

# FIGURE 1

# FIGURE 2

RAW MATERIAL GAS

H₂O CO₂ O₂

O₂, N₂

N₂

0284448

# FIGURE 3

| ADSORPTION | RECOVERY | WASHING | DESORPTION |
|------------|----------|---------|------------|

TIME

# FIGURE 4

PERCENTAGE OF DISTRIBUTION (%)

SYNTHETIC ZEOLITE 8~9Å

NATURAL ZEOLITE

HOLE DIAMETER (Å)

0284448

# FIGURE 5

## European Patent Office

# EUROPEAN SEARCH REPORT

Application Number

EP 88 40 0106

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | GB-A-2 065 496 (TORAY INDUSTRIES) * Figures 1,2; page 1, line 50 - page 3, line 2 * | 1,2 | B 01 D 53/04 C 01 B 21/04 |
| A | | 3-7 | |
| Y | EP-A-0 013 680 (UNION CARBIDE) * Claim 1 * | 1,2 | |
| A | GB-A-1 437 600 (B.O.C.) * Figure 2; page 2, line 110 - page 3, line 77 * | 4,5 | |
| A | EP-A-0 196 103 (AIR PRODUCTS & CHEMICALS) | | |

|  | TECHNICAL FIELDS SEARCHED (Int. Cl.4) |
|---|---|
|  | B 01 D 53/00 C 01 B 21/04 |

The present search report has been drawn up for all claims

| Place of search | Date of completion of the search | Examiner |
|---|---|---|
| THE HAGUE | 21-04-1988 | BOGAERTS M.L.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)